# FASCICULE DE BREVET EUROPEEN

(11) **EP 1 084 086 B1**
(45) Date de publication et mention de la délivrance du brevet: **06.05.2004**
(21) Numéro de dépôt: 99923715.9
(22) Date de dépôt: 10.06.1999
(51) Int. Cl.: C03C 25/00

(54) **SUBSTRAT A REVETEMENT PHOTOCATALYTIQUE**
SUBSTRAT MIT PHOTOKATALYTISCHER BESCHICHTUNG
SUBSTRATE WITH A PHOTOCATALYTIC COATING

(30) Priorité: 10.06.1998 FR 9807276
(43) Date de publication de la demande: 21.03.2001
(73) Titulaire: SAINT-GOBAIN RECHERCHE, 93300 Aubervilliers (FR)
(72) Inventeur: MARZOLIN, Christian, F-75003 Paris (FR); MARCHAL, Arnaud, F-60500 Chantilly (FR); TALPAERT, Xavier, F-75019 Paris (FR)
(74) Mandataire: Renous Chan, Véronique
(86) Numéro de dépôt international: PCT/FR1999/001375
(87) Numéro de publication internationale: WO 1999/064364

(56) Documents cités:
- WO-A-96/00198
- PATENT ABSTRACTS OF JAPAN vol. 097, no. 002, 28 février 1997 (1997-02-28) & JP 08 252305 A (AIWA:KK), 1 octobre 1996 (1996-10-01)
- DATABASE WPI Section Ch, Week 9506 Derwent Publications Ltd., London, GB; Class D15, AN 95-040466 XP002094308 & JP 06 320011 A (NIPPON MUKI KK), 22 novembre 1994 (1994-11-22)
- PATENT ABSTRACTS OF JAPAN vol. 098, no. 005, 30 avril 1998 (1998-04-30) & JP 10 001879 A (KOMATSU SEIREN KK), 6 janvier 1998 (1998-01-06)

## Description

La présente invention concerne des substrats munis d'un revêtement photocatalytique, le procédé d'obtention d'un tel revêtement et ses différentes applications.

Elle concerne plus particulièrement les revêtements comprenant des matériaux semi-conducteurs à base d'oxyde métallique, notamment d'oxyde de titane, qui sont aptes, sous l'effet d'un rayonnement de longueur d'onde adéquate, à initier des réactions radicalaires provoquant l'oxydation de produits organiques. Ces revêtements permettent ainsi de conférer de nouvelles fonctionnalités aux matériaux qu'ils recouvrent, notamment des propriétés anti-salissures, fongicides, bactéricides, algicides, anti-odeur, éventuellement combinées à des propriétés hydrophiles, anti-buée ...

Des substrats très divers ont jusque-là été envisagés, notamment des matériaux de construction utilisés dans le domaine du bâtiment ou des véhicules (vitrages, matériaux de façade, de bardage ou de toiture, ...) ou des matériaux utilisés dans des procédés d'épuration.

Il est ainsi connu des demandes de brevet internationales WO97/10186 et WO97/10185 des revêtements contenant du TiO₂ cristallisé anatase à propriétés photocatalytiques, revêtements obtenus à partir de la décomposition thermique de précurseurs organo-métalliques appropriés et/ou à partir de particules de TiO₂ " pré-cristallisées ", et notamment adaptés au dépôt en couche mince sur du verre pour préserver sa qualité optique. Il est également connu de la demande de brevet EP-A-0 306 301, l'utilisation de TiO₂ photocatalytique sur des matériaux fibreux utilisés pour purifier l'air, le dépôt du TiO₂ s'effectuant par un procédé de type sol-gel.

L'invention a alors pour but l'amélioration de ces revêtements photocatalytiques, visant notamment à leur assurer une meilleure tenue sur tout type de substrat, et notamment une meilleure adhérence et une meilleure durabilité, tout particulièrement sur des substrats présentant des caractéristiques de porosité ou de rugosité de surface.

L'invention a tout d'abord pour objet un substrat comprenant un matériau fibreux sous forme de laine minérale du type isolation et/ou de fils de verre du type renforcement, ledit matériau étant muni sur au moins une partie de sa surface et/ou dans son épaisseur d'un revêtement à propriétés photocatalytiques comprenant un matériau semi-conducteur à propriétés photocatalytiques du type oxyde ou sulfure au moins partiellement cristallisé, notamment de l'oxyde de titane sous forme anatase, ledit matériau étant associé à un promoteur d'adhérence audit matériau fibreux, ledit promoteur d'adhérence faisant partie du liant permettant la cohésion du matériau fibreux, liant choisi parmi un encollage pour laine minérale, un ensimage pour fils de renforcement, un liant pour mat ou voile obtenu à partir de fils de renforcement, un encollage pour voile obtenu à partir de laine de verre.

Le matériau semi-conducteur " actif " vis-à-vis de la photocatalyse peut être selon l'invention à base d'oxyde métallique au moins partiellement cristallisé, par exemple de l'oxyde de zinc, de l'oxyde d'étain, de l'oxyde de tungstène. L'exemple préféré selon l'invention concerne l'oxyde de titane au moins partiellement cristallisé sous forme anatase, qui est la phase cristalline qui confère au TiO₂ ses propriétés photocatalytiques. Il peut aussi s'agir de semi-conducteurs appartenant à la famille des sulfures, également au moins partiellement cristallisés, comme le sulfure de zinc ou de bore. (Dans la suite du texte, pour plus de simplicité, on mentionnera l'oxyde de titane, étant entendu que les indications données seront tout aussi valables pour les autres matériaux semi-conducteurs cités plus haut).

On comprend par " matériau fibreux " au sens de l'invention tout matériau contenant des fibres, notamment minérales, plus particulièrement des fibres agencées en laine minérale de verre ou de roche, du type de celles utilisées dans l'isolation thermique/phonique ou pour constituer des substrats de culture hors-sol. Ce terme de " matériau fibreux " inclut également les fibres/filaments agencés en fils, du type des fils utilisés dans le renforcement, notamment en verre.

Ces matériaux fibreux de base sont ensuite incorporés dans un " substrat " au sens de l'invention, sous diverses formes : il peut s'agir de feutres, mats, voiles, " coquilles " destinées à l'isolation de conduits, en laine minérale, des fils textiles assemblés en tissus, ou voile de non-tissé, en substrats de type papetier ...

Un revêtement photocatalytique permet de conférer à ces substrats connus de nouvelles fonctionnalités très intéressantes. Ainsi, les feutres/mats de laine minérale utilisés principalement dans l'isolation peuvent n'être traités que superficiellement, que sur l'une de leurs faces par exemple, ou sur chacune de leurs faces, et acquérir une fonction anti-salissure/anti-odeur sur au moins une de leurs faces traitées (la face visible et/ou la face cachée), dans des structures de faux-plafonds de bâtiments, dans des écrans acoustiques en bordure de routes ou de voies ferrées ..., la condition posée étant que le revêtement photocatalytique soit accessible à une source lumineuse, naturelle ou artificielle. Toujours dans le domaine de l'isolation, les " coquilles " précitées peuvent aussi être traitées côté intérieur et/ou extérieur ou sur toute leur épaisseur par exemple, pour leur conférer une fonction anti-salissure et/ou bactéricide, fongicide. Sous forme de mats ou de coquilles, les substrats traités selon l'invention peuvent avantageusement être disposés autour des gaines d'évacuation, dans tout système de ventilation ou de climatisation, mais aussi en étant disposés à l'intérieur de ces conduits, ces dispositifs étant de véritables nids à bactéries, la condition étant qu'il faut prévoir des moyens pour que le revêtement photocatalytique soit exposé à suffisamment de rayons ultraviolets pour être efficace : en face externe, visible, l'éclairage naturel peut suffire. Sinon, il faut associer aux substrats les moyens d'éclairage artificiels du type lampes à halogènes ou tubes fluorescents.

Une autre application concerne tous les systèmes de réflexion et/ou de diffusion de lumière naturelle ou provenant de moyens d'éclairage artificiels, comme des abats-jours, des rideaux, quand le substrat est par exemple sous forme de voile.

L'autre grande application, à part l'isolation thermique ou phonique, des substrats traités selon l'invention concerne la filtration ou l'épuration de fluides.

Il peut s'agir de tout filtre utilisé dans la filtration de gaz, notamment de l'air, de type voile ou filtre papetier, utilisé par exemple dans les systèmes de ventilation/climatisation d'habitacles évoqués plus haut, ou de locaux industriels, de véhicules ou de salles de laboratoire à taux de poussières contrôlé, du type salle " blanche ".

Le terme de " filtre " recouvre au sens de l'invention deux notions, à la fois la notion d'une véritable filtration où l'on sépare mécaniquement des particules de leur gaz porteur, et la notion de diffuseur, notamment de diffuseur anti-odeur, où le gaz à traiter n'est pas nécessairement contraint de passer à travers le substrat photocatalytique, où il peut notamment simplement être mis en contact avec celui-ci sans retenir les particules en suspension.

On peut citer beaucoup d'autres applications des " filtres " pour gaz selon l'invention : ils peuvent aussi être utilisés pour épurer tout type d'éffluents gazeux industriels, ou toute atmosphère d'un local, d'un lieu public donné (en tant que diffuseur anti-odeur dans le métro par exemple). Ils peuvent notamment permettre de réduire le taux de " VOC " (composés organiques volatils) d'un courant gazeux, d'une atmosphère donnés.

Les filtres, traités en surface ou dans leur épaisseur peuvent devenir beaucoup plus efficaces, et beaucoup plus durables : en effet, le traitement selon l'invention leur donne la capacité non seulement d'éliminer les micro-organismes, mais aussi de dégrader les résidus organiques du type graisses qui constituent généralement pour une bonne part les particules qui viennent colmater progressivement le filtre. Avec l'invention, ces filtres ont donc une durée de vie plus longue. Ils ont en outre une fonction anti-odeur.

Il peut aussi s'agir de filtres pour des liquides.

Les filtres pour liquide selon l'invention ont de nombreuses applications : ils peuvent être utilisés pour le recyclage d'eaux usées, le recyclage de l'eau des systèmes d'irrigation de substrats de culture hors-sol (pour désinfecter l'eau). Ils peuvent aussi remplir une fonction de dépollution, dépollution des sols notamment, ou une fonction de retraitement/dépollution d'éffluents liquides industriels.

On a vu l'intérêt de traiter selon l'invention tous ces substrats fibreux. Cependant, les munir d'un revêtement photocatalytique n'était pas au premier abord très facile. En effet, se posaient la question du mode de dépôt du revêtement sur un substrat généralement non lisse, non plan, de type rugueux, poreux, et celle de la durabilité de ce revêtement.

La solution de l'invention a consisté à moduler la façon dont on l'appliquait sur le substrat, à savoir superficiellement ou dans son épaisseur, selon les applications visées en fonction des besoins, et à assurer la solidarisation du TiO₂ anatase du revêtement, celui qui possède les performances photocatalytiques, au matériau fibreux par l'intermédiaire d'un promoteur d'adhérence approprié. Ce dernier peut ainsi servir de " matrice " aux éléments " actifs " du revêtement vis-à-vis du phénomène de photocatalyse.

Selon une première variante, l'oxyde de titane est déjà pré-cristallisé au moins partiellement sous forme anatase quand il est incorporé au revêtement, avant d'être déposé sur le substrat. Il peut être introduit dans le revêtement sous forme de particules cristallines en suspension colloïdale, ou sous forme de poudre sèche, constituée de particules éventuellement plus ou moins agglomérées entre elles. Cette variante présente l'avantage de ne pas imposer un traitement thermique spécifique élevé au revêtement/substrat sur lequel il est déposé (le TiO₂ cristallise sous forme anatase généralement autour de 400°C).

Selon une seconde variante (qui peut être combinée avec la première), l'oxyde de titane provient de la décomposition thermique de précurseurs, notamment du type organo-métallique ou halogénure métallique, au sein du revêtement. On peut ainsi fabriquer " in-situ ", le TiO₂ cristallisé anatase dans le revêtement une fois appliqué au substrat, en prévoyant un traitement thermique adhoc, qui doit cependant être compatible avec le substrat et le promoteur d'adhérence choisis.

En ce qui concerne le promoteur d'adhérence, celui-ci peut être mono-ou multi-composants, son ou ses composants pouvant être organique(s), minéral(aux) ou " hybrides " organo-minéral(aux).

Il peut ainsi comprendre un composant silicié, sous forme moléculaire ou sous forme polymérique, du type silane, silicone ou siloxane par exemple. Ces composants présentent en effet une bonne affinité avec la plupart des fibres minérales, verre, roche ou même céramique intéressant l'invention. On peut même, dans certains cas, parler d'une sorte de greffage du TiO₂ cristallisé aux fibres minérales par ce type de composant.

Le promoteur d'adhérence peut aussi comprendre un ou plusieurs polymères de type organiques. En fait, deux cas de figure se présentent : on peut choisir des polymères organiques standards, par exemple du type acrylique, phénol-formol ... Dans ce cas, ce composant risque d'être dégradé progressivement par photocatalyse par le TiO₂, au moins dans les zones (superficielles) du substrat susceptible d'être exposées aux rayons ultraviolets. Cependant, le processus peut en fait s'avérer avantageux dans certaines applications, en " libérant ", relarguant ainsi progressivement du TiO₂ actif. Mais on peut préférer éviter ou ralentir au maximum cette dégradation, en choisissant des polymères appropriés, généralement des polymères fluorés résistant bien à des attaques photocatalytiques, par exemple du type polymère acrylique fluoré, du type polytétrafluoroéthylène (P.T.F.E.), polyfluorure de vinylidène (P.V.D.F.), copolymères tétrafluoroéthylène-éthylène (E.T.F.E.), etc...

Une alternative consiste à garder un promoteur d'adhérence à base de polymère(s) organiques(s), et à contrecarrer leur dégradation par des additifs appropriés, notamment appartenant à la famille des anti-oxydants (comme le produit vendu sous la dénomination IRGANOX par la société Ciba), et/ou des absorbeurs d'ultra-violets (comme le produit vendu sous la dénomination TINUVIN par la même société) et/ou de stabilisants sous forme d'amines à encombrement stérique connues sous l'appellation anglo-saxonne " hindered amine light stabilizers " ou " HALS ".

Le promoteur d'adhérence peut aussi comporter au moins un oxyde métallique du type TiO₂ ou SiO₂ provenant de la décomposition thermique de précurseurs du type siliciés, organo-métallique ou halogénure métallique au sein du revêtement. Dans ce cas, le composant TiO₂ ou SiO₂ se trouve généré in-situ dans le revêtement, notamment une fois appliqué au substrat, par un traitement thermique approprié compatible avec le substrat. Dans le cas du TiO₂, il n'est cependant pas nécessaire d'envisager des températures très élevées nécessaires à une cristallisation anatase, si l'on recherche uniquement une fonction de promoteur d'adhérence : il peut parfaitement être amorphe ou partiellement cristallisé sous différentes formes cristallines, tout comme le SiO₂. On peut ainsi avoir un revêtement du type matrice d'oxyde métallique amorphe venant fixer les particules " actives " d'oxyde photocatalytique cristallisé.

Le promoteur d'adhérence peut aussi comporter au moins un composant minéral, choisi parmi les phosphates d'aluminium et les aluminosilicates de potassium ou de calcium.

Un mode de réalisation de l'invention consiste à ce que au moins un des deux éléments essentiels du revêtement, à savoir d'une part les éléments " actifs ", (vis-à-vis de la photocatalyse) et d'autre part le promoteur d'adhérence, fasse partie du liant permettant la cohésion intrinsèque du matériau fibreux.

En effet, s'il s'agit de laine minérale, verre ou roche, du type isolation, telle que celle produite par ISOVER SAINT-GOBAIN, celle-ci est dans de nombreuses applications munie d'un liant désigné sous le nom d'encollage généralement et appliqué généralement en phase liquide par pulvérisation sous les organes de fibrage. Le solvant/dispersant est généralement aqueux, il s'évapore au contact ou à proximité des fibres chaudes. Les agents de collage des fibres entre elles, généralement du type résine par exemple phénolique telle que des polymères urée-phénol-formaldéhyde durcissent à chaud. Une possibilité consiste alors à ajouter au milieu aqueux de l'encollage le promoteur d'adhérence et les éléments " actifs ", ou même à utiliser/adapter les composants de l'encollage pour leur faire jouer simultanément le rôle de liant des fibres entre elles et de promoteur d'adhérence fibres/éléments " actifs".

Pour plus de détails sur des compositions d'encollage type et leur mode d'application sur les fibres, on peut avantageusement se reporter, notamment, aux brevets EP-148 050, EP-246 952, EP-305 249, EP-369 848, EP-403 347, EP-480 778, EP-512 908. Il est cependant à noter que dans des applications particulières, la laine minérale peut être dépourvue de liant, par exemple celle constituée de fibres relativement fines utilisées pour réaliser des filtres papetiers, telles que décrites par exemple dans les brevets EP-0 267 092 et EP-0 430 770, ou des feutres aiguilletés.

S'il s'agit plutôt d'un matériau fibreux de type fils de renforcement, fils textile, notamment tel que celui fabriqué par VETROTEX, la cohérence des fils issus de l'assemblage de filaments unitaires sous filière est généralement assurée par application d'un liant désigné généralement sous le terme de composition d'ensimage. Là-encore, il est appliqué en phase liquide et comprend un ou plusieurs agents " collants " des fibres/filaments. On peut donc choisir d'ajouter au milieu liquide les éléments " actifs " et/ou le promoteur d'adhérence selon l'invention, ou encore adapter sa composition pour lui faire jouer à la fois le rôle de liant inter-filament et de promoteur d'adhérence fils/éléments " actifs ".

Pour plus de détails sur des compositions d'ensimage, on peut avantageusement se reporter, notamment, aux brevets EP-243 275, EP-394 090, EP-635 462, EP-657 396, EP-657 395, EP-761 619, WO-98/18737.

On peut aussi citer le brevet WO.98/516 33, concernant le dépôt d'ensimage en deux temps sous l'organe de fibrage, ensimage en outre apte à polymériser à température ambiante. Dans ce cas, on peut choisir d'introduire le matériau à propriétés photocatalytiques soit dans la première composition d'ensimage, soit dans la seconde, soit dans les deux.

Tous ces ensimages évoqués plus haut sont généralement appliqués à l'aide de rouleaux ensimeurs juste sous la filière, sur le matériau fibreux encore sous forme de filaments unitaires en cours de rassemblement en fils. Il existe aussi des liants destinés à assurer la cohésion de mats (ou voiles) obtenus à partir d'une nappe de fils de verre, et que l'on projette sur des fils continus ou non, déjà ensimés. On peut citer à titre d'exemple le brevet WO-97/21861. On peut incorporer le matériau photocatalytique dans ce liant, servant également de promoteur d'adhérence.

Les ensimages ou liants cités plus haut sont soit en phase aqueuse, soit en phase non aqueuse (comme ceux décrits plus haut dans les brevets EP-657 395 et EP-657 396 pré-cités). Dans ce dernier cas de figure, on n'a généralement plus besoin de traitement thermique pour éliminer l'eau, les composants choisis étant alors choisis de façon à pouvoir polymériser à température ambiante. Dans ce cas, on privilégie l'incorporation de matériaux à propriétés photocatalytiques pré-existantes indépendamment de tout traitement thermique, comme des particules de faible diamètre en oxyde de titane cristallisé.

Comme évoqué plus haut, le matériau fibreux selon l'invention peut donc être agencé sous forme de voile (de parement par exemple), de feutre, de papier, de formes géométriques diverses (feuilles type papier plan ou plissé par exemple, panneau, " coquille " cylindrique creuse, voile tissé ou non tissé ...). Le matériau fibreux peut aussi être en vrac, sous forme de bourre ou de flocons calibrés ou non.

Avantageusement, le revêtement photocatalytique de l'invention est appliqué au matériau fibreux de façon à ce qu'au moins une partie des " fibres " dudit matériau (incluant les notions de fibres, de filaments, de fils) soit gainée par le revêtement sur une épaisseur d'au moins 5 nm, notamment sur une épaisseur de l'ordre de 30 à 50 nm.

Ce gainage assure une efficacité maximale au revêtement, son activité photocatalytique étant d'autant plus grande qu'il se trouve réparti sur une surface spécifique importante. L'épaisseur préférée tient compte de la taille moyenne la plus communément trouvée des cristallites de TiO₂ anatase.

L'invention a également pour objet les procédés de fabrication des substrats définis plus haut.

Selon une première variante, on dépose le revêtement photocatalytique, en phase liquide, sur la ligne de production même du matériau fibreux. L'intérêt de cette variante réside dans le fait que l'on peut traiter le matériau fibreux encore semi-fini, et exploiter au mieux la température à laquelle il se trouve par exemple, d'où un gain en termes de temps et de coût de production. Ainsi, un premier mode de réalisation consiste à faire un dépôt " à chaud " du revêtement, entre les organes de fibrage et les organes de réception des fibres. Les organes de fibrage peuvent consister en des assiettes de centrifugation de verre dits " organes de centrifugation interne ", comme cela est par exemple décrit dans les brevets EP-0 189 534 et EP-0 519 797, permettant de fibrer de la laine minérale de type verre, ou des organes de fibrage par centrifugation dite externe à l'aide d'une succession de roues de centrifugation, comme cela est par exemple décrit dans les brevets EP-0 465 310 ou EP-0 439 385 et permettant d'obtenir de la laine minérale de type roche, basalte. Il peur aussi s'agir d'organes de fibrage par étirage mécanique pour obtenir des fils de verre de renforcement, par étirage pneumatique ou par étirage à la vapeur, selon des procédés bien connus de l'homme de l'art. On utilise ainsi le fait que les fibres sont encore à une température relativement élevée, en appliquant le revêtement généralement en solution/dispersion dans un solvant par exemple aqueux s'évaporant au contact ou à proximité des fibres. Le chaleur peut aussi permettre de durcir le ou les composants du promoteur d'adhérence s'ils sont du type résine, ou de les décomposer thermiquement s'ils sont du type précurseur silicié ou précurseur métallique mentionné plus haut.

Comme mentionné plus haut, le revêtement en phase liquide peut être appliqué en même temps qu'un éventuel " liant " du type composition d'encollage ou d'ensimage, ou même en faire partie. On peut aussi préférer de l'appliquer au matériau fibreux avant ou après ledit " liant ".

Selon un second mode de réalisation de cette première variante, on peut déposer le revêtement photocatalytique toujours généralement en phase liquide " après " les organes de réception recueillant les fibres/filaments, fils issu(e)s des organes de fibrage, et notamment avant ou pendant le traitement thermique post-fibrage du matériau fibreux. Ainsi, pour la laine minérale de type isolation, les organes de réception sont généralement constitués par un tapis convoyeur aspirant, rassemblant la laine minérale et la faisant passer dans une étuve de conformation. Il peut être judicieux d'appliquer le revêtement entre les deux organes (fibrage/réception), par exemple superficiellement, et d'utiliser la chaleur de l'étuve pour durcir, achever le revêtement si nécessaire.

De même, dans le domaine du verre de renforcement, les fils sont étirés et enroulés sous forme de bobines, ou coupés sous filière après avoir été ensimés de façon appropriée, puis généralement séchés dans des enceintes chauffées, avant d'être transformés et/ou utilisés.

Comme évoqué plus haut, on peut donc déposer le revêtement photocatalytique juste sous la filière, notamment concomitamment au dépôt de l'ensimage auquel il peut se trouver incorporé. On peut aussi le déposer lors de l'étape de finissage des fils bobinés en produits finis : il peut par exemple s'agir de l'opération de transformation visant à fabriquer des mats de fils coupés, en reprise. On peut aussi le déposer sur la ligne en aval, notamment lors de la transformation des fils continus regroupés en nappe en mat de fils continus.

Dans ces deux derniers cas, le revêtement photocatalytique peut être déposé par un système de projection du type pulvérisateur adapté, avant, en même temps que le liant utilisé, (ou être associé à lui en une même phase liquide), ou après son application. Le liant pour mat étant soit liquide (généralement une émulsion aqueuse), soit en poudre, le liant et les éléments nécessaires à la formation du revêtement peuvent être associés en une même phase liquide ou pulvérulente (par exemple quand les éléments actifs sont de la poudre de TiO₂ photocatalytique).

De façon similaire dans le domaine de la laine minérale d'isolation, on peut traiter le produit fibreux lors de sa transformation, notamment pendant sa transformation en voile de verre à partir de nappes de fibres de verre. Comme cette opération nécessite aussi l'utilisation d'un second encollage qui doit ensuite être durci thermiquement pour assurer la cohésion du voile, on peut introduire dans ce second encollage les éléments aptes à lui conférer les propriétés photocatalytiques voulues.

Selon une seconde variante, on dépose le revêtement photocatalytique en phase liquide sur le matériau fibreux fini, en reprise. Il s'agit alors là plutôt d'un traitement à " froid ", nécessitant un traitement thermique post-dépôt pour évaporer le solvant et éventuellement durcir (si on se trouve en phase liquide, et non pulvérulente bien sûr), achever de constituer le revêtement.

Quelle que soit la variante choisie, le revêtement peut être déposé par différentes techniques. Si le revêtement contient dès le départ des particules, ou de la poudre de TiO₂ cristallisé anatase " actif ", il n'est pas nécessaire que le substrat fibreux soit très chaud, les températures inférieures à 300°C et même inférieures à 200°C peuvent suffire, voire une température ambiante, donc des températures que l'on trouve sur les lignes de production des matériaux fibreux minéraux les plus communs, des températures en outre compatibles avec les encollages/ensimages de ces matériaux généralement organiques au moins pour partie. Si par contre, il faut générer le TiO₂ anatase " in-situ ", il est nécessaire d'envisager des températures de l'ordre de 400°C, plutôt avec des matériaux fibreux dépourvus de liant au sens général du terme et en reprise, par exemple par un procédé de type sol-gel.

Concrètement, on peut choisir d'imprégner à coeur le matériau fibreux et utiliser une technique de type " trempé " où l'on immerge au moins partiellement le matériau fibreux dans un bain contenant le revêtement en phase liquide. On peut choisir aussi une enduction, une pulvérisation adaptée à un traitement superficiel. Le dépôt peut s'effectuer également dans un fluide non liquide au sens usuel du terme, par exemple dans un fluide hypercritique.

L'invention a également pour objet l'application de ces substrats traités à des matériaux d'isolation thermique/phonique ou de parement, à fonction anti-salissure, fongicide, anti-bactérie, anti-odeur, à des filtres pour liquide ou gaz de type papetier, ou de type feutre, coquille.

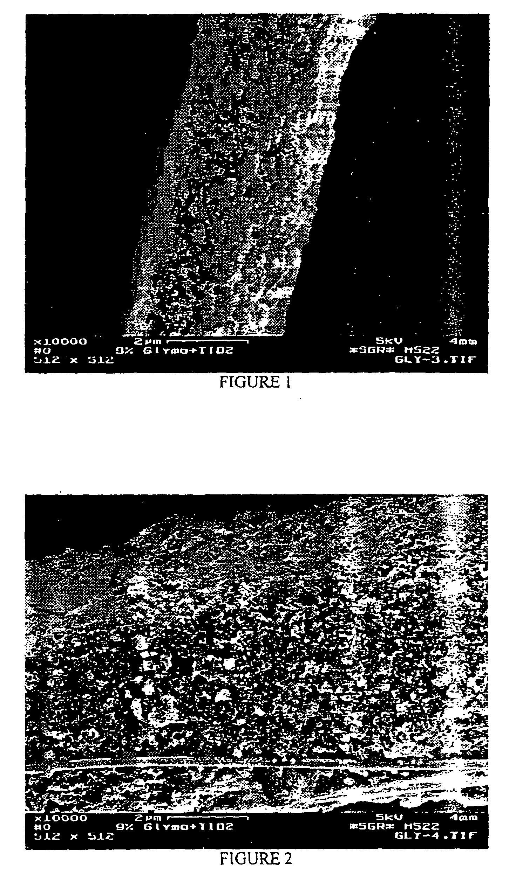

D'autres détails et caractéristiques avantageuses de l'invention ressortent de la description ci-après d'exemples de réalisation non limitatifs à l'aide de la figure suivante :
□ **figure 1** : un cliché obtenu par microscopie à balayage électronique (MEB) de la surface d'un matériau fibreux traité selon l'invention.

Tous les exemples suivant concernent le dépôt d'un revêtement dont les éléments " actifs " photocatalytiques sont en TiO₂ cristallisé anatase. (Il va de soi que, comme évoqué précédemment, l'invention s'applique de la même façon à des éléments " actifs " semi-conducteurs à propriétés photocatalytiques similaires ou TiO₂ anatase, et pouvant se présenter sous la même forme, notamment l'oxyde de zinc, l'oxyde d'étain et l'oxyde de tungstène).

### EXEMPLE 1

Un feutre aiguilleté (dimensions 210 x 297 x 5 mm³) composé de fibres de verre de type isolation obtenues par centrifugation interne sans liant et de densité 55 kg/m³ a été pulvérisé avec une solution aqueuse de TiO₂ sur toute son épaisseur, vendue sous la dénomination commerciale " TOSol " par Saga Céramics.

Cette solution comporte une dispersion de particules de TiO₂ cristallisé sous forme anatase, vraisemblablement constituée d'agglomérats de cristallites, ces agglomérats ayant une taille moyenne de l'ordre de 20 à 80 nm. Ces particules sont donc les éléments " actifs " en termes de photocatalyse. La solution comporte également un précurseur de TiO₂ organo-métallique qui va se décomposer en TiO2 majoritairement amorphe par traitement thermique et qui va jouer le rôle de promoteur d'adhérence.

Le revêtement obtenu a été cuit à 200°C pendant 2 heures et comporte des nanocristaux d'anatase dans une matrice de TiO₂ amorphe. La couleur jaune du filtre ainsi fabriqué témoigne de la présence de composés organiques provenant de la solution de précurseur. Après 2 heures d'exposition aux ultraviolets A sous une dose de 4 W/m², la couleur jaune a complètement disparu, ce qui montre une dégradation totale des polluants organiques résiduels.

### EXEMPLE 2

De la fibre de verre de type isolation obtenue par centrifugation interne sans liant a été transformée par voie papetière dans de l'eau pure. Le papier obtenu circulaire de diamètre 100 mm et de grammage 150 g/m², a ensuite été imprégné sur toute son épaisseur en le trempant dans une dispersion alcoolique contenant en volume 5% d'eau, 1% de tétraéthoxysilane (le promoteur d'adhérence) et 1% de particules de TiO₂ cristallisé anatase de 30 nm de diamètre moyen (les éléments " actifs "). Le papier a été séché à l'air libre puis cuit en étuve à 450°c pendant 30 minutes. Ce filtre a ensuite été placé sur un orifice d'entrée d'une hotte d'aspiration. Un filtre témoin sans TiO₂ anatase a été placé sur l'orifice voisin. Une lampe à ultraviolets A éclaire ces filtres à une dose de 4 W/m². Après 15 jours de fonctionnement de la hotte, le filtre traité était toujours blanc alors que le filtre non traité était encrassé.

### EXEMPLE 3

Une composition d'encollage de laine de verre de type isolation obtenue par centrifugation interne a été fabriquée en mélangeant :
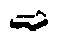 55 g de résine obtenue par condensation de phénol et de formaldéhyde dans un rapport molaire initial formaldéhyde/phénol d'environ 3,2/1, condensation opérée de façon conventionnelle avec un catalyseur sous forme de soude à 5,5% en poids par rapport au phénol,
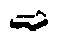 45 g d'urée,
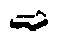 3 g d'aminopropyltriméthoxysilane,
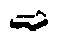 0.3 g de sulfate d'ammonium,
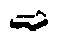 6 g d'ammoniaque à 30% volumique,
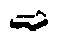 1200 g d'une dispersion de particules de TiO₂ cristallisé anatase à 25% en poids dans l'eau,
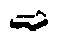 34 litres d'eau

Les particules de TiO₂ sont d'un diamètre moyen d'environ 45 nm. Le promoteur d'adhérence de celles-ci peut être considéré comme l'ensemble des autres composants de l'encollage, et tout particulièrement le silane.

Cette composition a été pulvérisée par la couronne d'encollage pendant un fibrage de la laine de verre sous les assiettes de centrifugation. Le feutre obtenu a ensuite été passé sur ligne dans une étuve à 180°C pendant 2 minutes. Le feutre a un grammage de 560 g/m², une perte au feu de 1,4% (mesure connue de l'homme de l'art, exprimée en poids, en chauffant le feutre à une température suffisante pour éliminer tous les composés organiques). Un morceau de 1 x 20 x 40 mm³ a été prélevé et mis dans une cuve avec 20 g d'une solution aqueuse à 1 g/l d'éthanol et 15 mg/l d'eau oxygénée. La solution a été éclairée par une lampe à mercure produisant 4 W/m² d'ultraviolets et la concentration en eau oxygénée a été suivie par colorimétrie. On observe une oxydation de l'éthanol par l'eau oxygénée, catalysée par le TiO₂ anatase irradié aux ultraviolets.

L'activité photocatalytique du feutre a été évaluée en mesurant le poids d'eau oxygénée H₂O₂ en milligrammes qui disparait par gramme de fibre dans la solution et par heure. Le résultat a été de 4,4 mg H₂O₂/g.fibre/heure.

Des échantillons issus du même traitement, de 200 x 300 x 200 mm³, ont été soumis à une exposition solaire naturelle. Progressivement la couleur jaune caractéristique de la résine utilisée a disparu des surfaces exposées et jusqu'à quelques centimètres de profondeur. Cette disparition indique clairement une dégradation de la résine phénolique utilisée ainsi que la pénétration de l'effet photocatalytique au sein du matériau. Des résultats similaires ont été obtenus sous irradiation contrôlée UVA de 4 W/m² pendant 24 heures.

### EXEMPLE 4

On a ajouté 280 g de glycidoxypropyltriméthoxysilane a une composition d'encollage similaire à l'exemple 3 (autre silane se combinant au précédent pour jouer le rôle de promoteur d'adhérence). Le feutre obtenu par fibrage et encollage avec cette solution a été étuvé à 180°C pendant 2 minutes. Le feutre a un grammage de 1 kg/m², une perte au feu de 1,4%. La mesure de l'activité photocatalytique, opérée comme à l'exemple 3, a donné une valeur de 3 mg H₂O₂/g.fibre/heure.

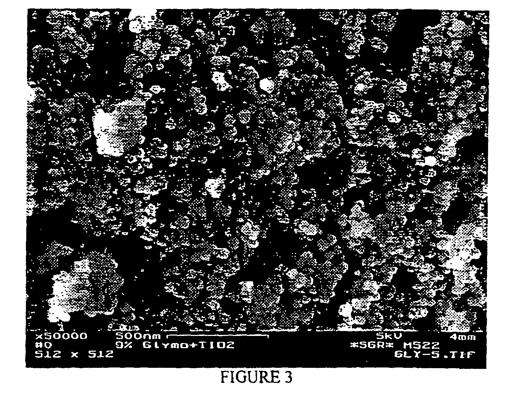

Les figures 1, 2 et 3 montrent, à trois échelles différentes, une fibre recouverte du revêtement photocatalytique. La figure 1 montre plus particulièrement une fibre à la surface de laquelle on distingue bien un gainage de particules de TiO₂, deux agrandissements successifs étant montrés aux figures 2 et 3.

En conclusion, on constate que le revêtement de l'invention présente une activité photocatalytique prouvée sur fibres quelles que soient les variantes de réalisation :

L'exemple 1 illustre un dépôt " en reprise ", hors ligne de production de laine minérale, utilisant des particules de TiO₂ " pré-cristallisées " et un promoteur d'adhérence minéral fabriqué in-situ sur un substrat fibreux de type feutre.

L'exemple 2 illustre également un dépôt " en reprise " sur un substrat fibreux de type papier, avec des particules de TiO₂ pré-cristallisées et un promoteur d'adhérence silicié.

Enfin, les exemples 3 et 4 illustrent un dépôt en ligne, à chaud sous les organes de fibrage, qui va permettre un traitement dans l'épaisseur du matériau fibreux, avec des particules de TiO₂ " pré-cristallisées " et des promoteurs d'adhérence de la famille des silanes associés aux composants d'un encollage standard, en phase aqueuse.

Des voiles photocatalytiques à base de fibres minérales ont été fabriquées à l'aide d'une installation qui permet d'opérer l'imprégnation d'un voile de verre dans une solution d'encollage, la succion de ce voile (afin de retirer l'excès de liant) et enfin sa cuisson en étuve, le tout en ligne et en continu. Le voile est déroulé sur un tapis transporteur, emmené dans le bain d'encollage par un rouleau d'imprégnation, passe au-dessus d'un caisson en dépression (dispositif de succion) et est finalement conduit par un second tapis convoyeur dans l'étude de cuisson.

Différents types de média photocatalytique ont été synthétisés selon ce procédé, conformément aux exemples suivants :

### EXEMPLE 5 : un média d'épuration des gaz

Un voile de verre de 80 g/m² a été imprégné par une solution aqueuse contenant 3.1 % de Glymo (glycidoxy propyltriméthoxy silane) et 2.9 % de nano-particules de dioxyde de titane, à une vitesse de 0.2 m/min.

Ce voile ayant subi une succion équivalente à 35 mm de colonne d'eau, a ensuite été cuit à 200°C pendant 10 minutes. La perte au feu résultante est de 7 %.

Des mesures d'efficacité en phase gaz ont alors été menées dans les conditions suivantes :
150 x 200 mm² du produit résultant ont été placés dans un réacteur de photocatalyse cylindrique. Ce réacteur est composé d'une lampe UV_{A} (365 nm) axiale autour de laquelle est entouré, avec 1 cm d'espacement, le média photocatalytique en 3 couches, et d'une double enveloppe en aluminium. L'intensité de l'irradiation sur le voile est de 1 mW/cm². Le réacteur est inséré dans un circuit fermé, en recirculation, le gaz traversant le média de l'intérieur du cylindre fermé sur le voile vers l'extérieur.

Le volume de la cellule (réacteur de photocatalyse) est de 0.9 l, celui du circuit complet (volume immobilisé) d'un litre. Les expériences ont consisté à évaluer les dégradations photocatalytiques du n-hexane.

Pour ce faire, différentes quantités de n-hexane (allant jusqu'à 2000 ppm dans l'air) ont été injectées dans le circuit, le débit de celui-ci étant régulé à 1 l/min. A intervalles réguliers, des échantillons de 50 µl de gaz ont été prélevés afin de mesurer la concentration de n-hexane présente dans le circuit.

Il a été montré que la dégradation directe par U-V du n-hexane est négligeable, de même que son absorption par le média. Par contre, le n-hexane est dégradé à quasiment 100 % en moins d'une heure quand il passe à travers le média photocatalytique, pourtant sous faible irradiation U-V.

### EXEMPLE 6 : un média d'épuration liquide

Selon le même procédé, un voile de verre de 60 g/m² a été imprégné dans une solution aqueuse contenant 1g/l de silane A1100 et 5 g/l de dioxyde de titane (vendu sous la dénomination P25 par la société Degussa) maintenu en suspension par des moyens ad hoc.

Le voile a été imprégné en ligne à 0.6 m/min, l'excès de liant ayant été enlevé sous une dépression de 90 mm de colonne d'eau. Le produit a été cuit à 300°C pendant 30 minutes. Des mesures d'efficacité en phase liquide ont alors été menées afin de qualifier ce matériau.

Une pièce circulaire de voile (diamètre 100 mm) a été placée à mi-hauteur dans un bêcher de 300 ml. Le fond et les bords du récipient ayant été opacifiés, le bêcher est éclairé par une rampe de lampes UVA (365 nm délivrant une puissance de 3.5 mW/cm² au voile. Une solution aqueuse (eau permutée) contenant 10 mg/l de phénol est versée dans le dispositif et est maintenue sous agitation magnétique. La décroissance en concentration du phénol est alors suivie, en effectuant des prélèvements à intervalle de temps régulier, par un spectrométre UV commercialisé par la société DR LANGE.

On a pu vérifier qu'en environ une heure au plus, quasiment 100 % du phénol avait disparu.

De façon plus générale, ces deux derniers exemples montrent l'intérêt de l'utilisation de voile de fibres minérales photocatalytiques tels que fabriqués dans les opérations d'épuration en milieu liquide comme en phase gazeuse.

## Revendications

1. Substrat comprenant un matériau fibreux sous forme de laine minérale du type isolation et/ou de fils de verre du type renforcement, ledit matériau étant muni sur au moins une partie de sa surface et/ou dans son épaisseur d'un revêtement à propriétés photocatalytiques comprenant un matériau semi-conducteur à propriétés photocatalytiques du type oxyde ou sulfure au moins partiellement cristallisé, notamment de l'oxyde de titane sous forme anatase, ledit matériau étant associé à un promoteur d'adhérence audit matériau fibreux, ledit promoteur d'adhérence faisant partie du liant permettant la cohésion du matériau fibreux, liant choisi parmi un encollage pour laine minérale, un ensimage pour fils de renforcement, un liant pour mat ou voile obtenu à partir de fils de renforcement, un encollage pour voile obtenu à partir de laine de verre.

2. Substrat selon la revendication 1, ***caractérisé en ce que*** le matériau semi-conducteur au moins partiellement cristallisé du type oxyde de titane est introduit dans le revêtement sous forme de particules en suspension colloïdale ou sous forme de poudre.

3. Substrat selon la revendication 1, ***caractérisé en ce que*** le matériau semi-conducteur au moins partiellement cristallisé, du type oxyde de titane, provient de la décomposition thermique de précurseur(s) organo-métallique(s), ou halogénure(s) métallique(s) au sein du revêtement.

4. Substrat selon l'une des revendications précédentes, ***caractérisé en ce que*** le promoteur d'adhérence est mono- ou multi-composants, organique, minéral ou hybride organe-minéral.

5. Substrat selon l'une des revendications précédentes, ***caractérisé en ce que*** le promoteur d'adhérence comporte un composant silicié, du type silane, silicone, siloxane.

6. Substrat selon l'une des revendications précédentes, ***caractérisé en ce que*** le promoteur d'adhérence comporte un ou plusieurs polymères organiques, notamment des polymères acryliques, des polymères fluorés, éventuellement associés à des additifs appartenant à la famille des anti-,oxydants et/ou des absorbeurs d'ultra-violets, et/ou des stabilisants du type amines à encombrement stérique.

7. Substrat selon la revendication 2, ***caractérisé en ce que*** le promoteur d'adhérence comporte au moins un oxyde métallique amorphe du type TiO₂ ou SiO₂ provenant de la décomposition thermique de précurseur(s) silicié(s), organo-métallique(s) ou halogénure métallique au sein du revêtement.

8. Substrat selon l'une des revendications précédentes, ***caractérisé en ce que*** le promoteur d'adhérence comporte au moins un composant minéral choisi parmi les phosphates d'aluminium, et les aluminosilicates de potassium ou de calcium.

9. Substrat selon l'une des revendications précédentes, ***caractérisé en ce que*** le matériau fibreux est agencé sous forme de voile, de feutre, de coquille, de papier ou de matériau en vrac.

10. Substrat selon l'une des revendications précédentes, ***caractérisé en ce que*** le revêtement à propriétés photocatalytiques gaine au moins une partie des fibres du matériau fibreux sur une épaisseur d'au moins 5 nm, notamment comprise entre 30 à 50 nm.

11. Procédé de fabrication du substrat selon l'une des revendications précédentes, ***caractérisé en ce qu'on*** dépose le revêtement à propriétés photocatalytiques en phase liquide sur la ligne de production du matériau fibreux, notamment entre les organes de fibrage du type assiette de centrifugation, organe de fibrage par centrifugation externe, par étirage mécanique, par étirage pneumatique ou à la vapeur, et les organes de réception des fibres, éventuellement avec le dépôt du liant en phase liquide des fibres entre elles du type composition d'encollage ou d'ensimage.

12. Procédé de fabrication du substrat selon l'une des revendications 1 à 10, ***caractérisé en ce qu'on*** dépose le revêtement à propriétés photocatalytiques en phase liquide sur la ligne de production du matériau fibreux, en aval des organes de réception des fibres issues des organes de fibrage, notamment avant les organes de traitement/conditionnement thermiques éventuels du type étuve.

13. Procédé de fabrication du substrat selon l'une des revendications 11 ou 12, ***caractérisé en ce qu'on*** dépose le revêtement à propriétés photocatalytiques en phase liquide sur le matériau fibreux, puis on fait subir audit matériau un traitement thermique.

14. Procédé selon l'une des revendications 11 à 13, ***caractérisé en ce qu'on*** dépose le revêtement en phase fluide, notamment liquide, par pulvérisation, enduction, trempé.

15. Application du substrat selon l'une des revendications 1 à 10 à des matériaux d'isolation thermique/phonique ou à des filtres, épurateurs, diffuseurs pour liquide ou gaz, afin de leur conférer des propriétés anti-salissures, fongicides, bactéricides, algicides ou anti-odeur.

## Patentansprüche

1. Fasermaterial in Form von Mineralwolle zur Isolierung und/oder von Glasfasern zur Verstärkung umfassendes Substrat, wobei das Material auf wenigstens einem Teil seiner Oberfläche und/oder seiner Dicke mit einer Beschichtung mit photokatalytischen Eigenschaften versehen ist, welche ein wenigstens teilweise kristallisiertes Halbleitermaterial mit photokatalytischen Eigenschaften vom Oxid- oder Sulfid-Typ umfasst, insbesondere ein Titanoxid in Form von Anatas, wobei das Material mit dem Fasermaterial über einen Haftvermittler verbunden ist, wobei der Haftvermittler Teil des Zusammenhaltes des Fasermaterials erlaubenden Bindemittels ist und wobei das Bindemittel aus einem Kleber für Mineralwolle, einer Schmälze für Verstärkungsfäden, einem Bindemittel für eine aus den Verstärkungsfäden erhaltene Matte oder ein aus den Verstärkungsfäden erhaltenes Vlies oder ein Kleber für einen aus Glaswolle erhaltenes Vlies ist.

2. Substrat gemäss Anspruch 1, **dadurch gekennzeichnet, dass** das wenigstens teilweise kristallisierte Halbleitermaterial vom Titanoxid-Typ in Form von Partikeln in einer kolloidalen Suspension oder in Pulverform in die Beschichtung eingebracht wird.

3. Substrat gemäss Anspruch 1, **dadurch gekennzeichnet, dass** das wenigstens teilweise kristallisierte Halbleitermaterial vom Titanoxid-Typ aus einer thermischen Zersetzung von einer oder mehreren organo-metallischen oder Metallhalogenid-Vorstufen innerhalb der Beschichtung stammt.

4. Substrat gemäss einem der vorhergehenden Ansprüche, **dadurch gekennzeichnet, dass** der Haftvermittler ein organischer, mineralischer oder organo-mineralischer Hybrid-, Einzel- oder Mehrkomponenten-Haftvermittler ist.

5. Substrat gemäss einem der vorhergehenden Ansprüche, **dadurch gekennzeichnet, dass** der Haftvermittler einen Silikatbestandteil vom Typ Silan, Silikon oder Siloxan umfasst.

6. Substrat gemäss einem der vorhergehenden Ansprüche, **dadurch gekennzeichnet, dass** der Haftvetmittler ein oder mehrere organische Polymere umfasst, insbesondere Polyacryle, fluorierte Polymere, optional in Verbindung mit Additiven aus der Familie der Antioxidantien und/oder UV-Adsorbentien und/oder Stabilisatoren von der Art sterisch gehinderter Amine.

7. Substrat gemäss Anspruch 2, **dadurch gekennzeichnet, dass** der Haftvermittler wenigstens ein amorphes Metalloxid vom Typ TiO₂ oder SiO₂ umfasst, wobei selbiges aus einer thermischen Zersetzung von einem oder mehreren organo-metallischen oder halogeno-metallischen Silikatvorstufen in der Beschichtung stammt.

8. Substrat gemäss einem der vorhergehenden Ansprüche, **dadurch gekennzeichnet, dass** der Hanvermittler einen aus Aluminiumphosphaten und Kalium- oder Calciumaluminosilikaten ausgewählten mineralischen Bestandteil umfasst.

9. Substrat gemäss einem der vorhergehenden Ansprüche, **dadurch gekennzeichnet, dass** das Fasermaterial in Form eines Vlieses, eines Filzes, eines Formkörpers in Form einer Schale, von Papier oder Schüttgut gebildet ist

10. Substrat gemäss einem der vorhergehenden Ansprüche, **dadurch gekennzeichnet, dass** die Beschichtung mit photokatalytischen Eigenschaften wenigstens einen Fasermaterialabschnitt mit einer Dicke von wenigstens 5 nm, insbesondere zwischen 30 und 50 nm aufweist.

11. Verfahren zur Herstellung eines Substrats gemäss einem der vorhergehenden Ansprüche, **dadurch gekennzeichnet, dass** die Beschichtung mit photokatalytischen Eigenschaften in einer flüssigen Phase auf einer Fasermaterialherstellungslinie abgelegt wird, insbesondere zwischen Faserziehvorrichtungen von der Art eines Schleuderkorbs, Zerfaserungsvorrichtungen mit äusserer Zentrifugierung, einer mechanischen Ziehvorrichtung, einer pneumatischen oder mit Dampf arbeitenden Zerfaserungsvorrichtung, und Faseraufnahmevorrichtungen, ggf. mit einer Ablage des flüssigen Bindemittels von der Art einer Kleberzusammensetzung oder einer Schmälzezusammensetzung für das Binden der Fasern untereinander.

12. Verfahren zur Herstellung eines Substrats gemäss einem der Ansprüche 1 bis 10, **dadurch gekennzeichnet, dass** die Beschichtung mit photokatalytischen Eigenschaften in einer flüssigen Phase auf einer Fasermaterialherstellungslinie nachfolgend der Faseraufnahmevorrichtungen, ausgangs der Zerfaserungsvorrichtungen abgelegt wird, insbesondere vor optionalen thermischen Behandlungs- oder Konditionierungsvorrichtungen von der Art eines Ofens.

13. Verfahren zur Herstellung eines Substrats nach einem der Ansprüche 11 oder 12, **dadurch gekennzeichnet, dass** die Beschichtung mit photokatalytischen Eigenschaften in einer flüssigen Phase auf dem Fasermaterial abgelegt wird, woraufhin selbiges einer thermischen Behandlung unterworfen wird.

14. Verfahren nach einem der Ansprüche 11 bis 13, **dadurch gekennzeichnet, dass** die Beschichtung in einer fluiden Phase, insbesondere einer flüssigen Phase, durch Zerstäuben, Auftragen oder Eintauchen abgelegt wird.

15. Verwendung eines Substrats gemäss einem der Ansprüche 1 bis 10 als thermische/akustische Isolationsmaterialien oder als Filter, als Reinigungselement, Flüssigkeits- oder Gasdiffusor, um demselben schmutzabweisende, fungizide, bakterizide, algizide oder geruchsabweisende Eigenschaften zu verleihen.

## Claims

1. Substrate comprising a fibrous material in the form of mineral wool of the insulation type and/or glass fibres of the reinforcement type, the material being provided, over at least a portion of the surface thereof and/or over the thickness thereof, with a coating which has photocatalytic properties and which comprises an at least partially crystallised semiconductor material which has photocatalytic properties and which is of the oxide or sulphide type, in particular titanium oxide in the form of anatase, the material being associated with an agent for promoting adhesion to the fibrous material, the adhesion promoting agent being part of the bonding agent which allows cohesion of the fibrous material, the bonding agent being selected from an adhesive agent for mineral wool, a sizing agent for reinforcing threads, a bonding agent for mat or web obtained from reinforcement threads, an adhesive agent for web obtained from glass wool.

2. Substrate according to claim 1, **characterised in that** the at least partially crystallised semiconductor material of the titanium oxide type is introduced into the coating in the form of particles in a colloidal suspension or in the form of powder.

3. Substrate according to claim 1, **characterised in that** the at least partially crystallised semiconductor material of the titanium oxide type originates from the thermal decomposition of organometallic or metal halide precursor(s) within the coating.

4. Substrate according to any one of the preceding claims, **characterised in that** the adhesion promoting agent is an organic, mineral or organo-mineral hybrid mono- or multi-component.

5. Substrate according to any one of the preceding claims, **characterised in that** the adhesion promoting agent comprises a silica-containing component, of the silane, silicone, siloxane type.

6. Substrate according to any one of the preceding claims, **characterised in that** the adhesion promoting agent comprises one or more organic polymers, in particular acrylic polymers, fluorine-containing polymers, which are optionally associated with additives which belong to the antioxidant series and/or ultra-violet absorbers and/or stabilisers of the amine type with steric hindrance.

7. Substrate according to claim 2, **characterised in that** the adhesion promoting agent comprises at least one amorphous metal oxide of the type TiO₂ or SiO₂ which originates from the thermal decomposition of silica-containing, organometallic or metal halide precursor(s) within the coating.

8. Substrate according to any one of the preceding claims, **characterised in that** the adhesion promoting agent comprises at least one mineral component selected from aluminium phosphates and potassium or calcium aluminosilicates.

9. Substrate according to any one of the preceding claims, **characterised in that** the fibrous material is arranged in the form of a web, felt, shell, paper or loose material.

10. Substrate according to any one of the preceding claims, **characterised in that** the coating having photocatalytic properties covers at least a portion of the fibres of the fibrous material over a thickness of at least 5 nm, in particular of from 30 to 50 nm.

11. Method for producing the substrate according to any one of the preceding claims, **characterised in that** the coating having photocatalytic properties is deposited in the liquid phase on the production line of the fibrous material, in particular between the fibre-forming elements of the type involving a centrifuging plate, an element for forming fibres by means of external centrifuging, by means of mechanical fibre drawing, or pneumatic or steam fibre drawing, and the fibre-receiving elements, optionally with the bonding agent of the adhesive or sizing agent compound type being deposited in the liquid phase of the fibres relative to each other.

12. Method for producing the substrate according to any one of claims 1 to 10, **characterised in that** the coating having photocatalytic properties is deposited in the liquid phase on the production line of the fibrous material, downstream of the elements for receiving the fibres which originate from the fibre-forming elements, in particular before the thermal processing/treatment elements which are optionally of the oven type.

13. Method for producing the substrate according to either claim 11 or 12, **characterised in that** the coating having photocatalytic properties is deposited in the liquid phase on the fibrous material and the material is then subjected to thermal processing.

14. Method according to any one of claims 11 to 13, **characterised in that** the coating is deposited in the fluid phase, in particular liquid phase, by means of spraying, coating, immersion.

15. Application of the substrate according to any one of claims 1 to 10 to thermal/acoustic insulation materials or to filters, purifiers, liquid or gas diffusers, in order to provide them with anti-staining, fungicidal, bactericidal, algaecidal or anti-odour properties.
